Europäisches Patentamt

European Patent Office

Office européen des brevets

(19)

(11) Veröffentlichungsnummer : **0 181 469**
**B1**

(12) EUROPÄISCHE PATENTSCHRIFT

(45) Veröffentlichungstag der Patentschrift :
09.11.88

(51) Int. Cl.⁴ : **H 04 B    3/03**

(21) Anmeldenummer : 85112073.3

(22) Anmeldetag : 24.09.85

(54) Einrichtung zur optimalen Anpassung einer Gabelschaltung an eine Fernmeldeleitung.

(30) Priorität : 07.11.84 DE 3440591

(43) Veröffentlichungstag der Anmeldung :
21.05.86 Patentblatt 86/21

(45) Bekanntmachung des Hinweises auf die Patenterteilung : 09.11.88 Patentblatt 88/45

(84) Benannte Vertragsstaaten :
AT BE CH DE GB IT LI LU. NL SE

(56) Entgegenhaltungen :
WO-A-82 /002 30
DE-A- 2 723 705
DE-B- 1 119 343
GB-A- 2 130 851
GB-A- 2 139 055
US-A- 3 177 302
US-A- 4 278 848

(73) Patentinhaber : **Neumann Elektronik GmbH**
**Bülowstrasse 104 - 110**
**D-4330 Mülheim 1 (DE)**

(72) Erfinder : **Neumann, Dirk, Dipl.-Ing.**
**Schemelsbruch 11**
**D-4330 Mülheim 1 (DE)**

(74) Vertreter : **Feder, Heinz, Dr. et al**
**Dipl.-Ing. P.-C. Sroka, Dr. H. Feder Dipl.-Phys. Dr. W.-**
**D. Feder, Patentanwälte Dominikanerstrasse 37**
**D-4000 Düsseldorf 11 (DE)**

## Beschreibung

Die Erfindung betrifft eine Einrichtung zur optimalen Anpassung einer Gabelschaltung an eine Fernmeldeleitung. Eine derartige Einrichtung ist beispielsweise aus der US-A-4 278 848 bekannt. Bei der bekannten Einrichtung ist die mit dem bidirektionalen Hauptzweig an die Fernmeldeleitung angeschlossene Gabelschaltung an ihrer dem Hauptzweig gegenüberliegenden Seite mit einem Nachbildungsnetzwerk abgeschlossen, das variable ansteuerbare Impedanzen enthält. An den einen Nebenzweig der Gabelschaltung ist ein ansteuerbarer Signalgenerator zur Abgabe eines Prüfsignals in diesen Nebenzweig angeschlossen, während an den anderen Nebenzweig der Gabelschaltung ein Signalempfänger angeschlossen ist zur Messung eines in Abhängigkeit von der Gabelübergangsdämpfung in diesen Nebenzweig übertretenden Anteil des Signalpegels. Die Ansteuerung der Impedanzen des Nachbildungsnetzwerkes, des Signalgenerators und des Signalempfängers erfolgt durch einen Mikrocomputer derart, daß mittels des Signalgenerators dem einen Zweig der Gabelschaltung vorgegebene Tonfrequenzsignale zugeführt werden und der in den anderen Nebenzweig der Gabelschaltung in Abhängigkeit von der Gabelübergangsdämpfung übertretende Anteil des Signalpegels gemessen wird. Dabei werden fortlaufend die Impedanzen des Nachbildungsnetzwerkes verändert bis eine optimale Anpassung der Gabelschaltung erreicht ist.

Gegenstand einer älteren Anmeldung (EP-A-0 155 571, Anmeldetag 1.3.85) ist eine Einrichtung zur optimalen Anpassung einer Gabelschaltung an eine Fernmeldeleitung, bei der die mit ihrem bidirektionalen Hauptzweig an die Fernmeldeleitung angeschlossene Gabelschaltung an ihrer dem Hauptzweig gegenüberliegenden Seite mit einem Nachbildungsnetzwerk mit einstellbarer Impedanz abschließbar ist. Gemäß dem älteren Vorschlag weist diese Einrichtung eine direkt an die Fernmeldeleitung anschließbare Meßeinrichtung auf, die folgende Einrichtungsteile enthält :

a) eine Gabelschaltung, die mit der an die Fernmeldeleitung anzupassenden Gabelschaltung hinsichtlich ihrer Übertragungseigenschaften vergleichbar ist, deren bidirektionaler Hauptzweig an die Fernmeldeleitung anschließbar ist und die an ihrer dem Hauptzweig gegenüberliegenden Seite mit einem Nachbildungsnetzwerk abgeschlossen ist, das variable, ansteuerbare Impedanzen enthält ;

b) einen Mikrocomputer, der mit Steuerelementen der variablen, ansteuerbaren Impedanzen des Nachbildungsnetzwerkes verbunden ist und dessen Steuersignale den Wert der Gesamtimpedanz des Nachbildungsnetzwerkes in vorgegebener Weise ändern ;

c) einen an den einen Nebenzweig der Gabelschaltung angeschlossenen vom Mikrocomputer her ansteuerbaren Signalgenerator zur Abgabe eines Prüfsignals mit konstantem Signalpegel in diesen Nebenzweig ;

d) einen an den anderen Nebenzweig der Gabelschaltung angeschlossenen Signalempfänger zur Messung des in Abhängigkeit von der Gabelübergangsdämpfung in diesen Nebenzweig übertretenden Anteils des Signalpegels und zur Erzeugung eines vom gemessenen Signalpegelanteil abhängigen Steuersignals, das über einen Analog-Digital-Wandler dem Mikrocomputer zugeführt wird zum Vergleich aufeinanderfolgender Meßwerte, zur Speicherung des Minimalmeßwertes und des zugeordneten Wertes der Gesamtimpedanz des Nachbildungsnetzwerkes und zur Berechnung der Gabelübergangsdämpfung ;

e) Anzeigevorrichtungen zur Anzeige der optimalen Gabelübergangsdämpfung und des optimalen Wertes der Gesamtimpedanz des Nachbildungsnetzwerkes.

Dabei kann das in der Meßeinrichtung angeordnete Nachbildungsnetzwerk eine vorgegebene Anzahl zueinander parallelgeschalteter ohmscher Widerstände und Kondensatoren aufweisen, wobei in der Zuleitung zu jedem der Widerstände und jedem der Kondensatoren ein steuerbares Schaltelement angeordnet ist. Dem in der Meßeinrichtung angeordneten Nachbildungsnetzwerk ist ein Nachbildungsnetzwerk mit einstellbarer Impedanz zum Anschluß der an die Fernmeldeleitung anzupassenden Gabelschaltung zugeordnet, das die gleiche Anzahl parallelgeschalteter Widerstände und Kondensatoren auf weist wie das in der Meßeinrichtung angeordnete Nachbildungsnetzwerk, wobei die Kombination dieser Widerstände und Kondensatoren von Hand einstellbar ist.

Bei der älteren Einrichtung wird von dem Grundgedanken ausgegangen, die maximale Übergangsdämpfung durch die Messung für eine größere Anzahl von Impedanzwerten des die Gabelschaltung abschließenden Nachbildungsnetzwerkes zu bestimmen und dann am Nachbildungsnetzwerk den Impedanzwert fest einzustellen, der dem kleinsten gemessenen Wert der Gabelübergangsdämpfung entspricht.

Die Meßeinrichtung dient also zunächst zur Bestimmung der maximalen Gabelübergangsdämpfung und des dieser Gabelübergangsdämpfung entsprechenden optimalen Impedanzwertes. Hierzu ist gemäß dem älteren Vorschlag notwendig, daß die Meßeinrichtung eine Gabelschaltung enthält, die hinsichtlich ihrer Übertragungseigenschaften vergleichbar der Gabelschaltung ist, welche an die Fernmeldeleitung angeschlossen werden soll. Dies kann beispielsweise dadurch erreicht werden, daß die Gabelschaltung in der Meßeinrichtung vom gleichen Typ bzw. der gleichen Bauart ist wie die Gabelschaltung, welche an die Fernmeldeleitung angeschlossen werden soll. Das mittels der Meßeinrichtung ausgeübte Meßverfahren besteht darin, dem einen Nebenzweig der Gabelschaltung ein Prüfsignal mit konstantem Signalpegel zuzuführen und den in den anderen Nebenzweig der Gabelschaltung in Abhängigkeit von der Gabelübergangsdämpfung übertretenden Anteil des Signalpegels fortlaufend zu messen. Vor jeder dieser Messungen wird die variable, ansteuerbare Impedanz des Nachbildungsnetzwerkes vom Mikrocomputer aus auf einen anderen Wert eingestellt. Die erhaltenen Meßwerte des übertretenden Anteils des Signalpegels werden miteinander verglichen und es wird jeweils der kleinere von zwei aufeinanderfolgenden Meßwerten sowie der ihm zugeordnete Impedanzwert gespeichert. Nach einer vorgegebenen Anzahl von Messungen wird aus dem kleinsten gemessenen Wert des Signalpegelanteils die entsprechende optimale Gabelübergangsdämpfung berechnet und diese sowie der ihr zugeordnete optimale Impedanzwert für das Nachbildungsnetzwerk an den Anzeigevorrichtungen der Meßeinrichtung angezeigt. Dieser Wert kann nun in einfacher Weise an einem Nachbildungsnetzwerk außerhalb der Meßeinrichtung eingestellt werden und dieses so justierte Nachbildungsnetzwerk dient zum Abschluß der Gabelschaltung, welche an die Fernmeldeleitung angeschlossen werden soll. Auf diese Weise kann eine optimale Anpassung dieser Gabelschaltung an die Fernmeldeleitung erreicht werden.

Es hat sich nun herausgestellt, daß bei diesem Verfahren die im Nachbildungsnetzwerk der Meßeinrichtung angeordneten ohmschen Widerstände und Kondensatoren innerhalb sehr enger Toleranzen mit den ohmschen Widerständen und Kondensatoren im Wert übereinstimmen müssen, die in dem Nachbildungsnetzwerk außerhalb der Meßeinrichtung, welches zum Abschluß der Gabelschaltung dienen soll, angeordnet sind. Wenn diese Übereinstimmung innerhalb sehr enger Toleranzen nicht erfüllt ist, läßt sich eine optimale Anpassung nur schwer erreichen.

Die der vorliegenden Erfindung zugrunde liegende Aufgabe bestand darin, die Einrichtung nach dem älteren Vorschlag so zu verbessern und weiter auszubilden, daß mit geringem Aufwand und in einfacher Weise eine optimale Anpassung der Gabelschaltung an die Fernmeldeleitung möglich ist. Dabei sollte die Anpassung wiederum ohne großen Zeit- und Arbeitsaufwand von ungeschultem Personal durchgeführt werden können.

Die Lösung der oben angegebenen Aufgabe erfolgt mit den Merkmalen aus dem Patentanspruch 1.

Der Grundgedanke der vorliegenden Erfindung besteht darin, zur Bestimmung der maximalen Gabelübergangsdämpfung und des dieser Gabelübergangsdämpfung entsprechenden optimalen Impedanzwertes genau die ohmschen Widerstände und Kondensatoren zu verwenden, die später in dem an die Gabelschaltung anzuschließenden Nachbildungsnetzwerk den optimalen Impedanzwert herstellen sollen. Damit ist in einfacher Weise die oben angegebene Forderung bezüglich der Toleranzen erfüllt, denn die ohmschen Widerstände und Kondensatoren des in der Meßeinrichtung angeordneten Nachbildungswerkes sind dann identisch mit den ohmschen Widerständen und Kondensatoren des Nachbildungsnetzwerkes, das an die Gabelschaltung angeschlossen werden soll.

Wenn mittels der Meßeinrichtung der der maximalen Gabelübergangsdämpfung entsprechende optimale Impedanzwert festgestellt ist, wird lediglich das Einschubteil aus der Meßeinrichtung herausgenommen und in das an die Gabelschaltung anzuschließende Nachbildungsnetzwerk eingesetzt.

Bei der erfindungsgemäßen Einrichtung braucht die Meßeinrichtung nicht notwendig eine eigene Gabelschaltung zu enthalten. Es ist vielmehr möglich, die Meßeinrichtung so auszubilden, daß sie direkt an die an die Fernmeldeleitung angeschlossene und optimal anzupassende Gabelschaltung angeschlossen wird. Dies hat den Vorteil, daß sichergestellt ist, daß die Gabelschaltung, für die mittels der Meßeinrichtung ein optimaler Impedanzwert des Nachbildungsnetzwerkes ermittelt ist, in ihren Übertragungseigenschaften identisch mit der Gabelschaltung ist, welche an die Fernmeldeleitung angeschlossen werden soll. Selbstverständlich ist es aber, wie bei der älteren Einrichtung, auch möglich, in der Meßeinrichtung eine eigene Gabelschaltung fest anzuordnen (Patentanspruch 2).

Die Erzeugung des optimalen Impedanzwertes in diesem Nachbildungsnetzwerk kann dann in verschiedener Weise erfolgen.

Wenn die in der Meßeinrichtung angeordneten steuerbaren Schaltelemente keinen zusätzlichen Eigenwiderstand aufweisen, was beispielsweise dann der Fall ist, wenn Relais verwendet werden, genügt es, wenn im Einschubteil lediglich die ohmschen Widerstände und Kondensatoren enthalten sind. In dem an die Gabelschaltung anzuschließenden Nachbildungsnetzwerk sind dann Schalter angeordnet, mit deren Hilfe an diesem nachbildungsnetzwerk nach dem Einsetzen des Einschubteils genau die von der Meßeinrichtung ermittelte und an ihr angezeigte Kombination von Widerständen und Kondensatoren von Hand eingestellt werden kann (Patentanspruch 3).

Wenn die in der Meßeinrichtung angeordneten steuerbaren Schaltelemente einen Eigenwiderstand aufweisen, der berücksichtigt werden muß, ist es zweckmäßig, wenn diese steuerbaren Schaltelemente zusätzlich im Einschubteil angeordnet sind und mit in das an die Gabelschaltung anzuschließende Nachbildungsnetzwerk eingesetzt werden. Dies ist beispielsweise dann der Fall, wenn als steuerbare Schaltelemente elektronische Schaltelemente verwendet werden. In dem an die Gabelschaltung anzuschließenden Nachbildungsnetzwerk können dann Schalter angeordnet sein, durch die wiederum die von der Meßeinrichtung ermittelte und angezeigte Kombination von Widerständen und Kondensatoren von Hand einstellbar ist, indem, wie weiter unten näher erläutert, innerhalb des an die Gabelschaltung anzuschließenden Nachbildungsnetzwerkes eine zusätzliche Spannungsquelle angeordnet ist und durch die Schaltereinstellung die Steuereingänge der steuerbaren Schaltelemente mit der Spannungsquelle verbunden werden, durch die die gewünschte Kombination von Widerständen und Kondensatoren eingeschaltet wird (Patentanspruch 4).

Es ist aber weiterhin möglich, daß als steuerbare Schaltelemente in bekannter Weise elektronisch fixierbare Schaltelemente, beispielsweise sogenannte EPROMS oder EEPROMS dienen. Diese elektronisch fixierbaren Schaltelemente sind ebenfalls im Einschubteil angeordnet und werden bereits innerhalb der Meßeinrichtung nach Ermittlung des optimalen Impedanzwertes vom Mikrocomputer aus in der gewünschten Schaltstellung fixiert. In diesem Fall kann in dem an die Gabelschaltung anzuschließenden Nachbildungsnetzwerk sowohl auf die Schalter als auch auf die zusätzliche Spannungsquelle verzichtet werden. Es braucht kein Wert mehr abgelesen und eingestellt zu werden, sondern es genügt nach vollzogener Messung das Einschubteil aus der Meßeinrichtung herauszunehmen, in das an die Gabelschaltung anzuschließende Nachbildungsnetzwerk einzusetzen und dieses Nachbildungsnetzwerk an die Gabelschaltung anzuschließen (Patentanspruch 5).

Im folgenden werden anhand der beigefügten Zeichnungen Ausführungsbeispiele für den Gegenstand der Zusatzerfindung näher erläutert.

In den Zeichnungen zeigen :

Fig. 1a in einem Blockschaltbild eine erste Ausführungsform der an die Fernmeldeleitung anschließbaren Meßeinrichtung zur Bestimmung der optimalen Gabelübergangsdämpfung und des ihr zugeordneten Impedanzwertes des Nachbildungsnetzwerkes ;

Fig. 1b eine andere Ausführungsform der Meßeinrichtung in einer Darstellung analog Fig. 1a ;

Fig. 1c eine andere Ausführungsform der Meßeinrichtung, die keine eigene Gabelschaltung aufweist ;

Fig. 2a in schematischer Darstellung eine Ansicht der Meßeinrichtung nach Fig. 1a bzw. Fig. 1b von außen ;

Fig. 2b in schematischer, teilweise als Blockschaltbild ausgeführter Darstellung eine Ausführungsform der an die Fernmeldeleitung anzuschließenden Gabelschaltung mit einem Nachbildungsnetzwerk mit einstellbarer Impedanz ;

Fig. 2c in einer Darstellung analog Fig. 2b eine andere Ausführungsform einer an die Fernmeldeleitung anzuschließenden Gabelschaltung ;

Fig. 2d in einer Darstellung analog Fig. 2b eine dritte Ausführungsform einer an die Fernmeldeleitung anzuschließenden Gabelschaltung.

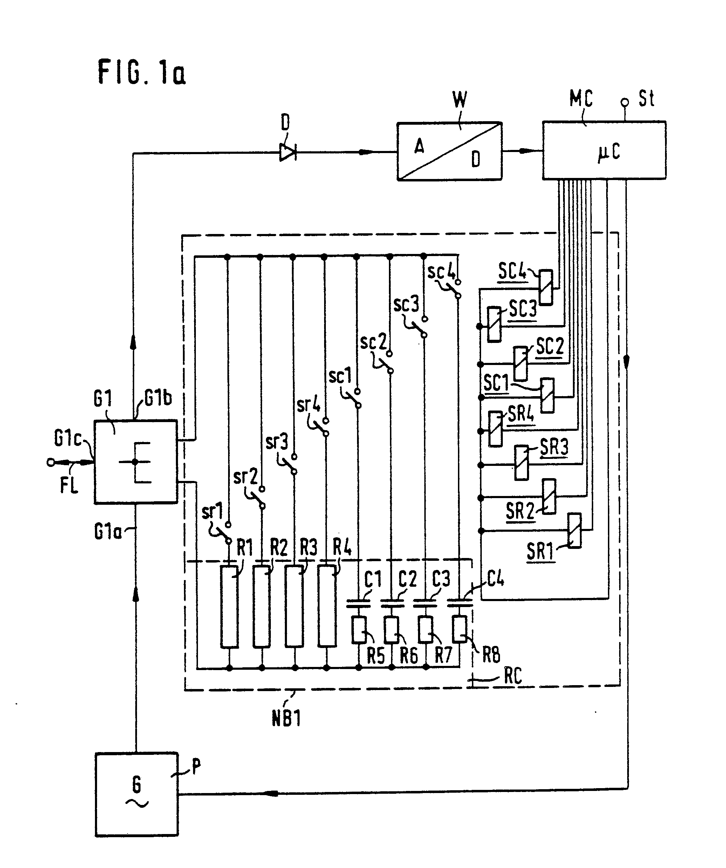

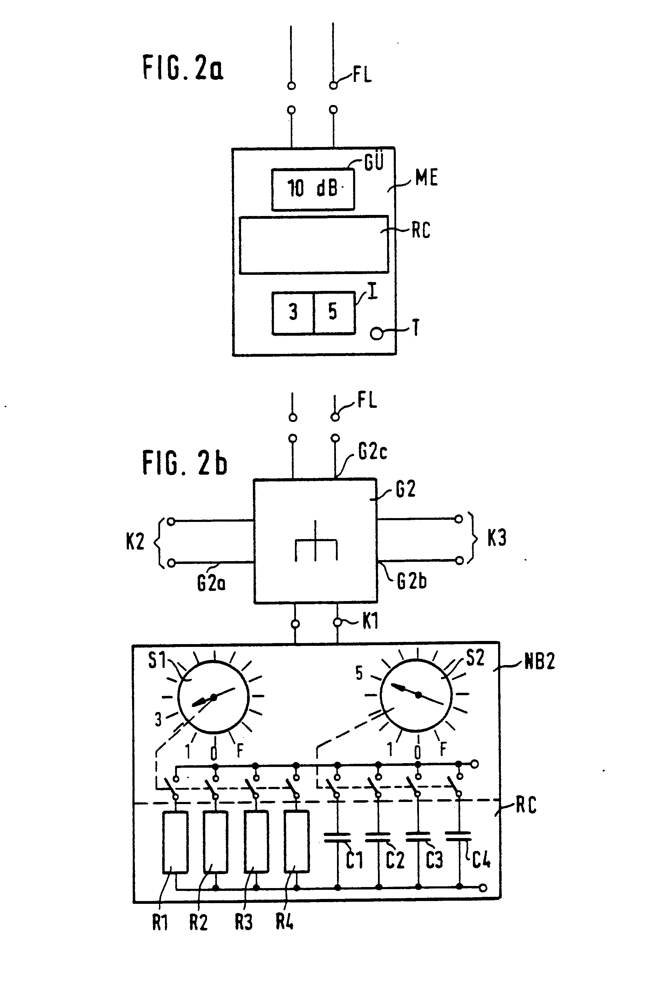

Die in Fig. 2a von außen dargestellte Meßeinrichtung ME kann in einer ersten Ausführungsform so ausgebildet sein, wie dies in Fig. 1a dargestellt ist. Sie weist eine Gabelschaltung G1 auf, die mit ihrem bidirektionalen Hauptzweig G1c an die Fernsprechleitung FL angeschlossen wird. Die Gabelschaltung G1 ist an der dem Hauptzweig gegenüberliegenden Seite mit einem Nachbildungsnetzwerk NB1 abgeschlossen, das vier Widerstände R1 bis R4 und vier Kondensatoren C1 bis C4 mit in Serie geschalteten Widerständen R5 bis R8 aufweist, die alle zueinander parallelgeschaltet sind. Außerdem sind die Widerstände R1 bis R4 sowie die Kondensatoren C1, C4 innerhalb eines Einschubteils RC angeordnet, das aus der Meßeinrichtung ME herausnehmbar ist und in weiter unten näher erläuterter Weise in das Nachbildungsnetzwerk NB2 (Fig. 2b) eingesetzt werden kann, mit dem die an die Fernmeldeleitung FL anzuschließende Gabelschaltung G2 abgeschlossen werden soll.

In der Meßeinrichtung ist in jedem der zu einem der Widerstände R1 bis R4 oder Kondensatoren C1 bis C4 führenden Parallelzweige ein Relaiskontakt sr1 bis sr4 bzw. sc1 bis sc4 eingeschaltet. Die diesen Relaiskontakten zugeordneten Relaisspulen SR1 bis SR4 bzw. SC1 bis SC4 sind mit Steuerausgängen eines Mikrocomputers MC verbunden. Durch entsprechende Ansteuerung von diesem Mikrocomputer MC aus sind daher die Impedanzwerte des Nachbildungsnetzwerkes durch Schließen der entsprechenden Relaiskontakte einstellbar.

Der Mikrocomputer MC steuert gleichzeitig einen Signalgenerator P, der an den einen Nebenzweig G1a der Gabelschaltung G1 angeschlossen ist. Der andere Nebenzweig G1b der Gabelschaltung G1 ist über einen als Spitzenwertgleichrichter ausgebildeten Signalempfänger D und einen Analog-Digital-Wandler W an den Mikrocomputer MC angeschlossen.

Die Ansteuerung des Mikrocomputers MC erfolgt über einen Starteingang St.

Die Funktionsweise der in Fig. 1a dargestellten Schaltung bei der Durchführung der Messung der optimalen Gabelübergangsdämpfung ist folgende :

Es wird zunächst gesteuert vom Mikrocomputer MC aus, vom Signalgenerator P, ein Prüfsignal mit vorgegebenem konstantem Signalpegel in den Nebenzweig G1a der Gabelschaltung G1 gegeben. Gleichzeitig wird am Nachbildungsnetzwerk NB1 vom Mikrocomputer MC aus eine bestimmte vorgegebene Kombination aus den Widerständen R1 bis R4 und den Kondensatoren C1 bis C4 über die ansteuerbaren Relaiskontakte sr1 bis sr4 bzw. sc1 bis sc4 eingestellt.

Der größte Anteil des vom Signalgenerator P abgegebenen Signalpegels soll über die Gabelschaltung G1 in den bidirektionalen Zweig der Gabelschaltung G1c und damit zur Fernmeldeleitung FL laufen. Ein gewisser Anteil des Signalpegels wird infolge der begrenzten Gabelübergangsdämpfung in den anderen Nebenzweig G1b geleitet. Dieser Anteil des Signalpegels wird vom Spitzenwertgleichrichter D empfangen und dem Analog-Digital-Wandler zugeführt, der den Signalwert in einen Digitalwert umwandelt und dem Mikrocomputer MC zuführt. Es wird nun taktweise die am Nachbildungsnetzwerk NB1 eingestellte Kombination aus Widerstandswerten und Kapazitätswerten verändert und jeweils der in den Nebenzweig G1b der Gabelschaltung G1 übertretende Signalpegel gemessen und der Meßwert in der oben beschriebenen Weise dem Mikrocomputer MC zugeführt. Dort werden jeweils zwei aufeinanderfolgende Meßwerte miteinander verglichen und der kleinere von beiden wird gespeichert. Auf diese Weise wird schließlich nach einer vorgegebenen Anzahl von Messungen der Minimalwert eines gemessenen Signalpegelanteils ermittelt. Diesen Minimalwert des gemessenen Signalpegelanteils entspricht eine ganz bestimmte, am Nachbildungsnetzwerk NB1 eingestellte Kombination aus den Widerständen R1 bis R4 und den Kondensatoren C1 bis C4. Die den minimalen Meßwert des Signalpegelanteils antsprechende Kombination wird ebenfalls gespeichert. Aus dem Minimalwert des gemessenen Signalpegelanteils wird die optimale Gabelübergangsdämpfung vom Mikrocomputer MC berechnet.

Die Meßeinrichtung ME weist eine Anzeigevorrichtung GÜ zur Anzeige der optimalen Gabelübergangsdämpfung auf sowie eine Anzeigevorrichtung I zur Anzeige des dieser optimalen Gabelübergangsdämpfung zugeordneten Impedanzwertes. Die Angabe des Impedanzwertes kann in codierter Form, beispielsweise als zweistellige HEX-Zahl erfolgen.

Der Meßvorgang kann durch einen Taster T ausgelöst werden, bei dessen Betätigung dem Mikrocomputer MC über den Eingang St das Startsignal zugeführt wird.

Wenn nach durchgeführter Messung in der oben bereits angegebenen Weise das die Widerstände R1 bis R4 und die Kondensatoren C1 bis C4 enthaltende Einschubteil RC in das in Fig. 2b dargestellte Nachbildungsnetzwerk NB2 eingesetzt ist, kann der an der Anzeigevorrichtung I der Meßeinrichtung ME abgelesene Wert für die einzustellende Impedanz an diesem Nachbildungsnetzwerk NB2 eingestellt werden, mit dem die Gabelschaltung G2, welche optimal an die Fernmeldeleitung FL angepaßt werden soll, an der ihren bidirektionalen Hauptzweig G2c gegenüberliegenden Seite abgeschlossen wird. An die beiden Nebenzweige G2a und G2b der Gabelschaltung G2 kann dann in an sich bekannter und nicht eigens dargestellter Weise, beispielsweise eine bidirektionale Verstärkerschaltung angeschlossen sein.

Die Gabelschaltung G2 entspricht in ihrem Typ genau der Gabelschaltung G1, die in der Meßeinrichtung ME angeordnet ist.

Durch das Einsetzen des Einschubteils RC in des Nachbildungsnetzwerk NB2 entsprechen die in diesem Nachbildungsnetzwerk enthaltenen Widerstände R1 bis R4 und die Kondensatoren C1 bis C4 genau den Widerständen und Kondensatoren, mit denen die Messung in der Meßeinrichtung ME durchgeführt worden ist. Die Einstellung der angezeigten optimalen Kombination dieser Widerstände und Kondensatoren erfolgt durch zwei Schalter S1 und S2. Der Schalter S1 ist den Widerständen, der Schalter S2 den Kondensatoren zugeordnet. An jedem der Schalter S1 und S2 sind 16 Einstellungen entsprechend den HEX-Zahlen 0 bis F möglich. Jede der HEX-Zahlen 0 bis F entspricht einer der 16 möglichen Einstellungen der Kombination von vier parallelgeschalteten Widerständen bzw. Kondensatoren.

Es braucht also bei dieser Ausführungsform der Einrichtung beim Anschluß des Nachbildungsnetzwerkes NB2 an die Gabelschaltung G2 lediglich an der Anzeigevorrichtung I der Meßeinrichtung ME der codierte Impedanzwert abgelesen werden, der dann mittels der Schalter S1 und S2 am Nachbildungsnetzwerk NB2 eingestellt werden kann. Dies ist bei dem dargestellten Ausführungsbeispiel, wie aus Fig. 2a und 2b ersichtlich, der durch die HEX-Zahlen « 35 » dargestellte Wert.

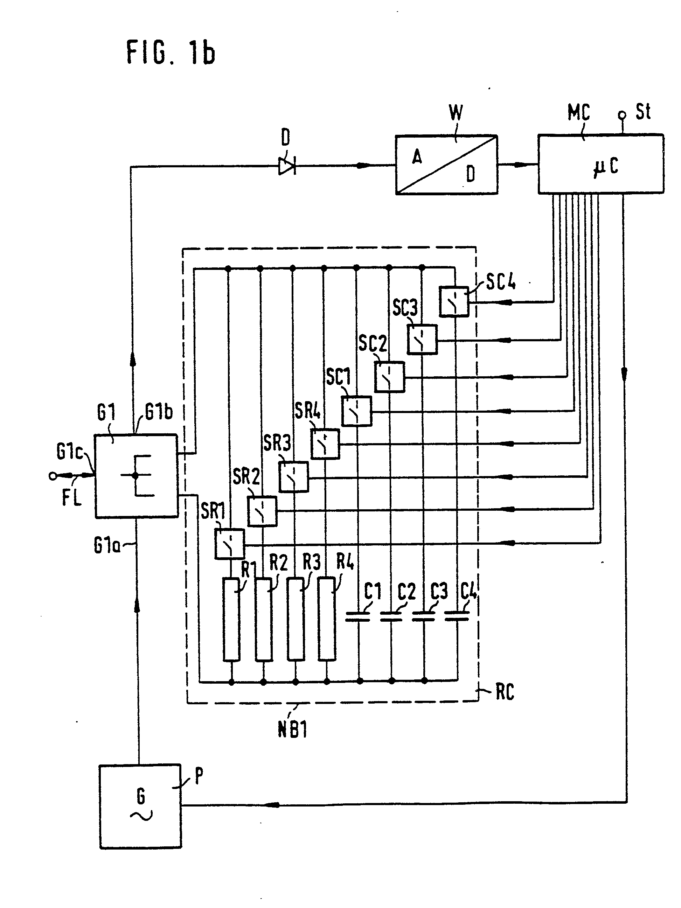

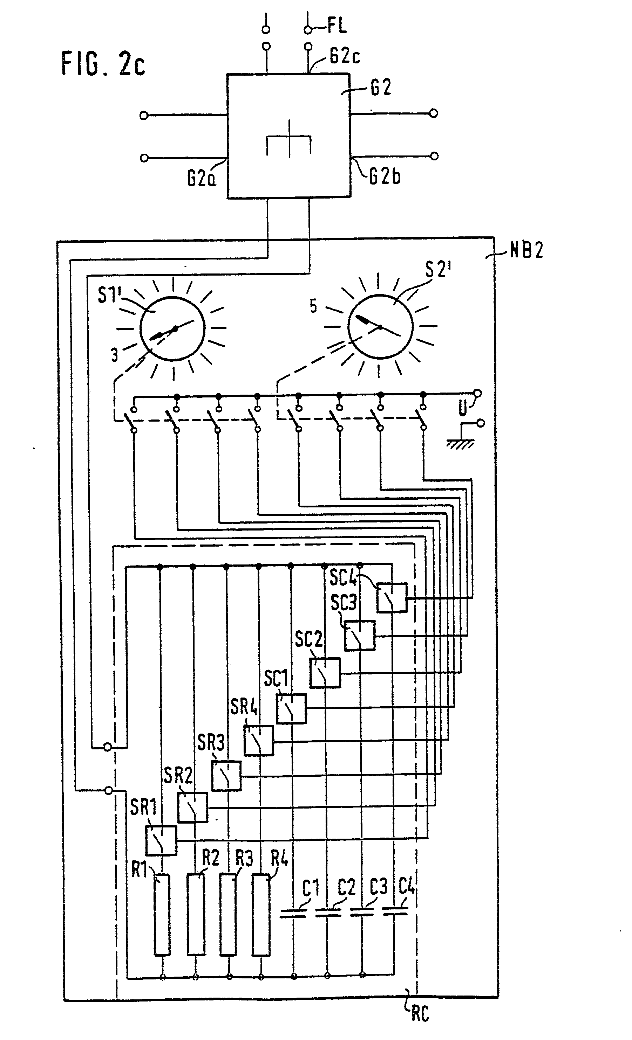

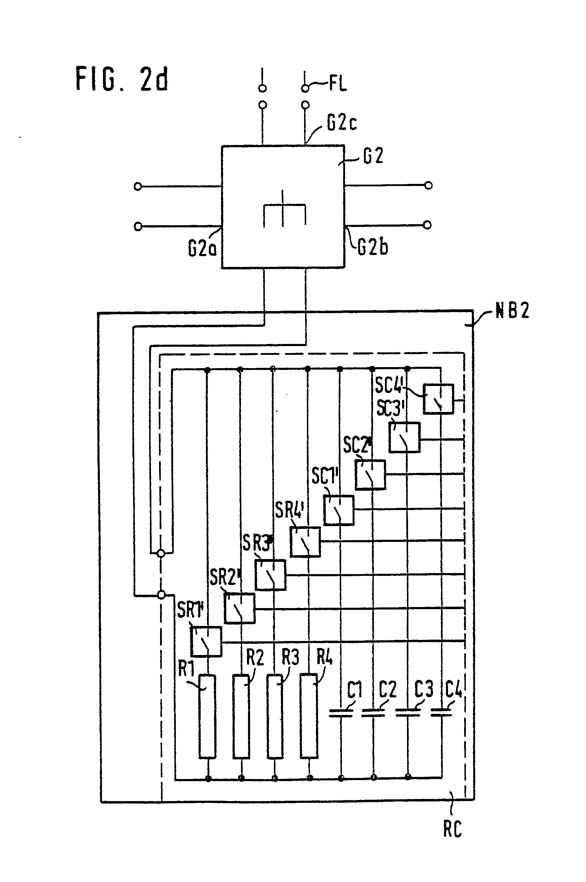

In Fig. 1b sowie den Fig. 2c und 2d sind Varianten der Gesamteinrichtung dargestellt.

Die Schaltung nach Fig. 1b entspricht in ihren wesentlichen Teilen der Schaltung nach Fig. 1a mit dem Unterschied, daß als ansteuerbare Schaltelemente in den zu den Widerständen R1 bis R4 bzw. den Kondensatoren C1 bis C4 führenden Parallelzweigen keine Relais, sondern elektronische Schaltelemente, beispielsweise Transistoren, Optokoppler oder dergleichen, angeordnet sind, deren Ansteuereingänge mit Steuerausgängen des Mikrocomputers MC verbunden sind. Weiterhin sind bei dieser Ausführungsform diese steuerbaren Schaltelemente SR1 bis SR4 und SC1 bis SC4 innerhalb des Einschubteils RC angeordnet, der in der bereits beschriebenen Weise aus der Meßeinrichtung ME herausgenommen und in das Nachbildungsnetzwerk NB2, daß die an die Fernmeldeleitung anzupassende Gabelschaltung G2 abschließt, eingesetzt werden kann. Auf diese Weise wird erreicht, daß die Widerstände dieser steuerbaren Schaltelemente sowohl bei der Messung als auch bei der späteren Einstellung der optimalen Impedanzwerte mit berücksichtigt werden.

Der Aufbau der Schaltung nach Fig. 1b entspricht in den übrigen Elementen genau dem Aufbau der Schaltung nach Fig. 1a und es sind daher auch die gleichen Bezugszeichen verwendet. Auch die Funktionsweise entspricht genau der bereits oben beschriebenen Funktionsweise bei der Durchführung der Messung. Nach Abschluß der Messung wird, wie in Fig. 2a dargestellt, der ermittelte Optimalwert für die einzustellende Kombination aus Widerständen und Kondensatoren an der Anzeigevorrichtung I angezeigt. Das Einschubteil RC wird aus der Meßeinrichtung ME nach Fig. 1b herausgenommen und in das Nachbildungsnetzwerk NB2 nach Fig. 2c eingesetzt. Dieses an die Gabelschaltung G2 angeschlossene Nachbildungsnetzwerk enthält zwei Schalter S1' und S2', mit deren Hilfe in der aus Fig. 2c ersichtlichen Weise die Steuereingänge der steuerbaren Schaltelemente SR1 bis SR4 und SC1 bis SC4 an eine Spannungsquelle U anschließbar sind. Entsprechend dem gewählten Wert der Einstellung an den beiden Schaltern S1' und S2' werden über die steuerbaren Schaltelemente ganz bestimmte Kombinationen von Widerständen und Kondensatoren eingeschaltet. Es kann also auch hier die angezeigte optimale Kombination in einfachster Weise eingestellt werden.

Eine weitere, besonders einfache Ausführungsform der Meßeinrichtung ergibt sich aus Fig. 1b

im Zusammenhang mit Fig. 2b.

In der Schaltung nach Fig. 1b können die steuerbaren Schaltelemente SR1 bis SR4 und SC1 bis SC4 auch als elektronisch fixierbare Schaltelemente ausgebildet sein. Derartige Schaltelemente sind an sich bekannt. Es können hier Schaltelemente verwendet werden, die auch als elektronische Speicher verwendet werden und unter der Bezeichnung EPROM oder EEPROMS bekannt sind. Auch in diesem Fall verläuft die Messung mittels der Meßeinrichtung ME in der beschriebenen Weise und es wird lediglich nach Abschluß der Messung und eventueller Anzeige der optimalen Kombination aus Widerständen und Kondensatoren der ermittelte Optimalwert in der Weise fixiert, daß den steuerbaren Schaltelementen SR1 bis SR4 und SC1 bis SC4 vom Mikrocomputer MC aus Signale zugeführt werden, mit denen jeweils die ermittelte optimale Kombination an den Schaltelementen fixiert bzw. einprogrammiert wird.

Es kann dann, wie anhand der Ausführungsform nach Fig. 2c beschrieben, das Einschubteil RC, welches sowohl die Widerstände R1 bis R4 und die Kondensatoren C1 bis C4 als auch die steuerbaren Schaltelemente R1 bis R4 und C1 bis C4 enthält, aus der Meßeinrichtung ME herausgenommen und in ein Nachbildungsnetzwerk NB2 eingesetzt werden, das in Fig. 2b dargestellt ist und das zum Unterschied von der Schaltung nach Fig. 2c keine Schalter aufzuweisen braucht, mit denen die ermittelte Kombination einzustellen wäre. In Fig. 2d sind die steuerbaren Schaltelemente zur besseren Unterscheidung mit SR1' bis SR4' bzw. SC1' bis SC4' bezeichnet. Bei dieser Ausführungsform braucht also nach Abschluß der Messung mittels der Meßeinrichtung ME das Einschubteil RC lediglich in das Nachbildungsnetzwerk NB2, welches die Gabelschaltung G2 abschließt, eingesetzt zu werden, ohne daß weitere Einstellungen vorgenommen werden müssen. Durch die Fixierung an den steuerbaren Schaltelementen SR1' bis SR4' und SC1' bis SC4' ist die optimale Kombination von Widerständen und Kondensatoren bereits eingestellt und damit die Gabelschaltung G2 optimal angepaßt.

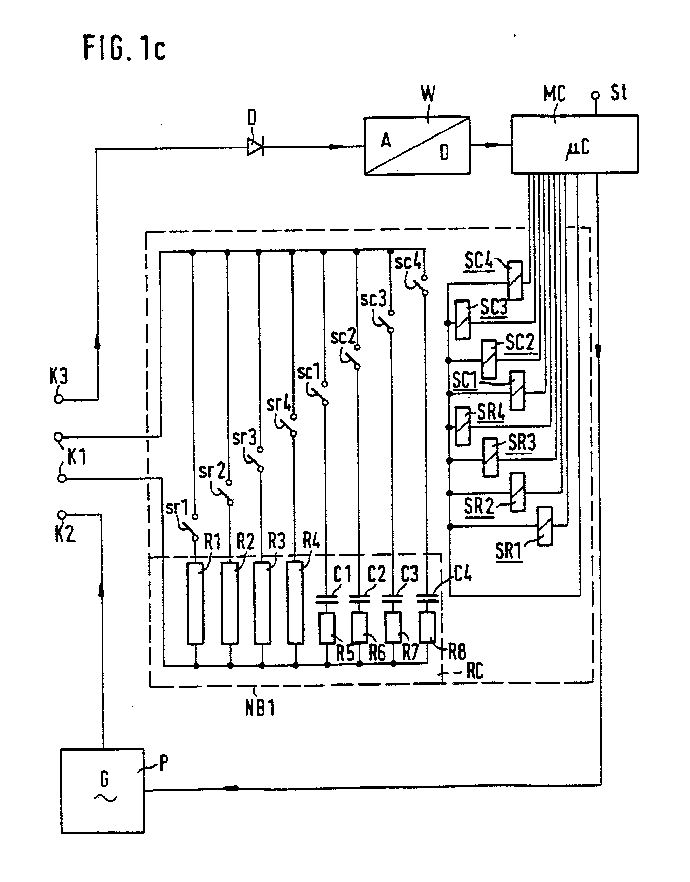

In Fig. 1c ist eine andere Ausführungsform der Meßeinrichtung dargestellt, bei der innerhalb der Meßeinrichtung keine eigene Gabelschaltung vorgesehen ist. Vielmehr ist die in Fig. 1c dargestellte Schaltung an die Gabelschaltung G2, wie sie in Fig. 2b dargestellt ist, direkt anschließbar. Dabei werden die Anschlußpunkte K1, K2 und K3 mit den entsprechenden Punkten der Schaltung nach Fig. 1c verbunden (in Fig. 1c sind die Kontakte K2 und K3 der Einfachheit halber einpolig dargestellt).

Bis auf das Fehlen einer eigenen Gabelschaltung entspricht die Schaltung nach Fig. 1c in allen Einzelheiten der Ausführungsform nach Fig. 1a. Es wurden daher auch die gleichen Bezugsziffern beibehalten wie in Fig. 1a.

Auch der Meßvorgang verläuft wie anhand der Fig. 1a und 2b beschrieben. Nach der Durchführung der Messung wird das Einschubteil RC aus der Meßeinrichtung herausgenommen und in das Nachbildungsnetzwerk NB2 in Fig. 2b eingesetzt. Es werden dann mittels der Schalter S1 und S2 die optimalen Werte der Impedanz des Nachbildungsnetzwerkes eingestellt.

Der Anschluß der in Fig. 1c dargestellten Meßeinrichtung ist in Fig. 2b nur schematisch dargestellt. In der Praxis kann dieser Anschluß in nicht eigens dargestellter Weise, beispielsweise so erfolgen, daß die Meßeinrichtung mit einem Anpassungsstecker ausgerüstet ist, der zur Durchführung der Messung anstelle des Einschubteils RC in das Nachbildungsnetzwerk NB2 in Fig. 2b einsteckbar ist. Nach Durchführung der Messung wird der Anpassungsstecker herausgezogen und an seiner Stelle das Einschubteil RC in das Nachbildungsnetzwerk NB2 eingesetzt.

**Patentansprüche**

1. Einrichtung zur optimalen Anpassung einer Gabelschaltung an eine Fernmeldeleitung, bei der die mit ihrem bidirektionalen Hauptzweig an die Fernmeldeleitung angeschlossene Gabelschaltung (G2) an ihrer dem Hauptzweig gegenüberliegenden Seite mit einem Nachbildungsnetzwerk (NB2) mit einstellbarer Impedanz abschließbar ist und die eine direkt an die Fernmeldeleitung (FL) anschließbare Meßeinrichtung aufweist, die folgende Einrichtungsteile enthält :

a) ein an eine Gabelschaltung (G1) zu deren Abschluß an ihrer dem Hauptzweig gegenüberliegenden Seite anschließbares Nachbildungsnetzwerk (NB1), das eine vorgegebene Anzahl zueinander parallelgeschalteter ohmscher Widerstände (R1-R4) und Kondensatoren (C1-C4) aufweist, wobei in der Zuleitung zu jedem der Widerstände und jedem der Kondensatoren ein steuerbares Schaltelement (SR1-SR4 ; SC1-SC4) angeordnet ist und die ohmschen Widerstände (R1-R4) und Kondensatoren (C1-C4) innerhalb eines aus der Meßeinrichtung (ME) herausnehmbaren Einschubteils (RC) angeordnet sind und dieses Einschubteil (RC) in das zugeordnete, an die Gabelschaltung (G2) anzuschließende Nachbildungsnetzwerk (NB2) einsetzbar ist ;

b) einen Mikrocomputer (MC), der mit den Steuereingängen der steuerbaren Schaltelemente (SR1-SR4, SC1-SC4) des Nachbildungsnetzwerkes (NB1) verbunden ist und dessen Steuersignale den Wert der Gesamtimpedanz des Nachbildungsnetzwerkes in vorgegebener Weise ändern ;

c) einen an den einen Nebenzweig (G1a) einer Gabelschaltung (G1) anschließbaren, vom Mikrocomputer (MC) her ansteuerbaren Signalgenerator (P) zur Abgabe eines Prüfsignals mit konstantem Signalpegel in diesen Nebenzweig ;

d) einen an den anderen Nebenzweig (G1b) einer Gabelschaltung anschließbaren Signalempfänger (D) zur Messung des in Abhängigkeit von der Gabelübergangsdämpfung in diesen Nebenzweig übertretenden Anteils des Signalpegels und zur Erzeugung eines vom gemessenen Signalpegelanteil abhängigen Steuersignals, das über einen Analog-Digital-Wandler (W) dem Mikrocomputer (MC) zugeführt wird zum Vergleich aufeinanderfolgender Meßwerte, zur Speicherung des Minimalmeßwertes und des zugeordneten Wertes der Gesamtimpedanz des Nachbildungsnetzwerkes und zur Berechnung der Gabelübergangsdämpfung ;

e) Anzeigevorrichtungen zur Anzeige der minimalen Gabelübergangsdämpfung und des optimalen Wertes der Gesamtimpedanz des Nachbildungsnetzwerkes (NB1), wobei Vorrichtungen (S1, S2 bzw. SR1'-SC4') zum Einstellen oder Fixieren einer durch den Mikrocomputer (MC) ermittelten Kombination von Widerständen (R1-R4) und Kondensatoren (C1-C4) entsprechend dem optimalen Wert des Gesamtimpedanzwertes des Nachbildungsnetzwerkes (NB1 = NB2) vorgesehen sind.

2. Einrichtung nach Anspruch 1, dadurch gekennzeichnet, daß die Meßeinrichtung (ME) eine Gabelschaltung (G1) enthält, die mit der an die Fernmeldeleitung (FL) anzupassenden Gabelschaltung (G2) hinsichtlich ihrer Übertragungseigenschaften vergleichbar ist, deren bidirektionaler Hauptzweig (G1c) an die Fernmeldeleitung (FL) anschließbar ist und die an ihrer dem Hauptzweig gegenüberliegenden Seite mit dem Nachbildungsnetzwerk (NB1) abgeschlossen ist, während an ihren einen Nebenzwein (G1a) der Signalgenerator (P) und an ihren anderen Nebenzweig (G1b) der Signalempfänger (D) angeschlossen sind.

3. Einrichtung nach Anspruch 1 oder 2, dadurch gekennzeichnet, daß die steuerbaren Schaltelemente Relais (SR1-sr1 ect.) sind und im zugeordneten an die Gabelschaltung (G2) anzuschließenden Nachbildungsnetzwerk (NB2) Schalter (S1, S2) angeordnet sind, durch die die ermittelte Kombination von Widerständen und Kondensatoren von Hand einstellbar ist.

4. Einrichtung nach Anspruch 1 oder 2, dadurch gekennzeichnet, daß das Einschubteil (RC) zusätzlich die steuerbaren Schaltelemente (SR1 bis SC4) enthält und im zugeordneten, an die Gabelschaltung (G2) anzuschließenden Nachbildungsnetzwerk (NB2) Schalter (S1', S2') angeordnet sind, durch die vorgegebene Steuereingänge der steuerbaren Schaltelemente (SR1 ect.) von Hand mit einer Spannungsquelle (U) verbindbar sind.

5. Einrichtung nach Anspruch 1 oder 2, dadurch gekennzeichnet, daß das Einschubteil (RC) zusätzlich die steuerbaren Schaltelemente (SR1' ect.) enthält, welche als in ihrer Schaltstellung elektronisch fixierbare Schaltelemente ausgebildet sind.

**Claims**

1. A device for optimally matching a termination to a telephone line, in which the termination (G2), whose 2-way main branch is connected to the telephone line, can be connected at its side opposite the 2-way main branch to a mimic circuit (NB2) of adjustable impedance, the device having a measurement device which can be connected directly to the telephone line (FL), the measurement device containing the following equipment :

a) a mimic circuit (NB1) connectable to the termination (G1) at its side opposite to the 2-way main branch and containing a predetermined number of parallel-connected resistors (R1 to R4) and capacitors (C1 to C4), each connected to a switch (SR1 to SR4 and SC1 to SC4), the resistors and capacitors all being enclosed in a plug-in unit (RC) which can be removed from the measurement device (ME) and inserted into a second mimic circuit (NB2) connectable to a second termination (G2) ;

b) a micro-computer (MC) connected to the switches (SR1 to SR4 and SC1 to SC4) of the mimic circuit (NB1) and delivering command signals for changing the total impedance of the mimic circuit (NB1) in a predetermined manner ;

c) a signal generator (P) in a side-branch (G1a) of the termination (G1) and controlled by the micro-computer (MC) to deliver a test signal of constant signal level to the side-branch (G1a) ;

d) a signal receiver (D) in the other side-branch (G1b) of the termination (G1) for measuring the residual portion of the signal level flowing over this side-branch (G1b) in dependence on the termination transition attenuation, and for delivering to the micro-computer (MC), over an analog-to-digital converter (W), a digital control signal depending on the measured residual portion of the signal level ; the micro-computer comparing the levels of each of two successive signals and storing the least level, together with the corresponding total impedance of the mimic circuit (NB1) and calculating the termination transition attenuation ;

e) display devices for displaying the least termination transition attenuation and the best value of the total impedance of the mimic circuit (NB1) ; there also being provided devices (S1, S2 or SR1' to SC4') for adjusting or fixing a combination, calculated by the microcomputer (MC), of resistors (R1 to R4) and capacitors (C1 to C4) corresponding to the best value of the total impedance of the mimic circuit (NB1 = NB2).

2. Device as claimed in Claim 1, characterised in that the measurement device (ME) contains a termination (G1) which is comparable, in regard to its transmission characteristics, to the termination (G2) which is to be matched to the telephone line (FL) ; the termination (G1) having its 2-way main branch (G1c) connectable to the telephone line (FL) and its side opposite to its 2-way main branch connectable to the mimic circuit (NB1) ; one side-branch (G1a) of the termination (G1) being connected to the signal generator (P), its other side-branch (G1b) being connected to the signal receiver. (D).

3. Device as claimed in Claims 1 or 2, characterised in that the switches are relay switches (such as SR1, sr1) ; the mimic circuit (NB2), which is to be connected to the termination (G2), having switches (S1, S2) which can be used for manually adjusting the measured combination of resistors and capacitors.

4. Device as claimed in Claims 1 or 2, characterised in that the plug-in unit (RC) also contains the switches (SR1 to SC4) ; the mimic circuit (NB2) which is to be connected to the termination (G2) having switches (S1', S2') which can be used for manually connecting predetermined terminals of the switches (such as SR1) to a voltage source (U).

5. Device as claimed in Claims 1 or 2, characterised in that the plug-in unit (RC) also contains switches (such as SR1') which can be electronically fixed after switching.

## Revendications

1. Dispositif pour adapter de manière optimale un circuit hybride à une ligne de télécommunication, dans lequel le circuit hybride (G2) raccordé par sa branche principale bidirectionnelle à la ligne de télécommunication peut être raccordé, de son côté opposé à la branche principale à un réseau de reconstitution (NB2) avec impédance réglable et qui possède un dispositif de mesure pouvant être raccordé à la ligne de télécommunication (FL) et qui comporte les composants suivants :

a) un réseau de reconstitution (NB1) pouvant être raccordé à un circuit hybride (G1) pour terminer celui-ci de son côté opposé à la branche principale, ce circuit (NB1) comportant un nombre prédéterminé de résistances ohmiques (R1-R4) et de condensateurs (C1-C4) montés en parallèle tandis qu'un élément de commutation pouvant être commandé (SR1-SR4 ; SC1-SC4) est monté dans la conduite d'alimentation vers chacune des résistances et vers chacun des condensateurs et que les résistances ohmiques (R1-R4) et les condensateurs (C1-C4) sont montés dans une partie enfichable (RC) pouvant être retirée du dispositif de mesure (ME) et cette partie enfichable (RC) peut être introduite dans le réseau de reconstitution correspondant à raccorder au circuit hybride (G2) ;

b) un micro-ordinateur (MC) qui est connecté aux entrées de commande des éléments de commutation pouvant être commandés (SR1-SR4 ; SC1-SC4) du réseau de reconstitution (NB1) et dont les signaux de commande modifient la valeur de l'impédance totale du réseau de reconstitution d'une manière prédéterminée ;

c) un générateur de signaux (P) pouvant être commandé par le micro-ordinateur (MC) et être raccordé à une branche secondaire (G1a) d'un circuit hybride (G1) pour émettre un signal d'essai avec niveau de signal constant dans cette branche secondaire ;

d) un récepteur de signaux (D) pouvant être raccordé à l'autre branche secondaire (G1b) d'un circuit hybride pour mesurer la fraction du niveau de signal passant dans cette branche secondaire en fonction de l'amortissement de transfert de jonction dans cette branche secondaire et pour créer un signal de commande dépendant de la fraction de niveau de signal mesurée qui est amenée par un convertisseur analogique-numérique (W) au micro-ordinateur (MC) pour y comparer les valeurs de mesure successives pour mettre en mémoire la valeur de mesure minimale et la valeur correspondante de l'impédance totale du réseau de reconstitution et pour calculer l'amortissement de transfert de la jonction ;

e) des dispositifs d'affichage pour indiquer l'amortissement de transfert minimal de la jonction et la valeur optimale de l'impédance totale du réseau de reconstitution (NB1) dans lesquels des dispositifs (S1-S2 et SR1'-SC4') sont prévus pour déterminer ou choisir une combinaison de résistances (R1-R4) et de condensateurs (C1-C4) déterminée par le micro-ordinateur (MC) et correspondant à la valeur optimale de l'impédance totale du circuit de reconstitution (NB1 = NB2).

2. Dispositif selon la revendication 1, caractérisé en ce que le dispositif de mesure (ME) comporte un circuit hybride (G1) qui est comparable au circuit de mesure (G2) à adapter à la ligne de télécommunications (FL) pour ce qui concerne les caractéristiques de transmission, dont la branche principale bidirectionnelle (G1c) peut être raccordée à la ligne de télécommunication (FL) et qui est terminée de son côté opposé à la branche principale par le réseau de reconstitution (NB1) tandis qu'à l'une des branches secondaires (G1a) est raccordé le générateur de signaux (P) et qu'à l'autre branche secondaire (G1b) est raccordé le récepteur de signaux (D).

3. Dispositif selon la revendication 1 ou 2, caractérisé en ce que les éléments de commutation pouvant être commandés sont des relais (SR1 -sr1 etc) et que des commutateurs (S1, S2) sont montés dans le réseau de reconstitution (NB2) correspondant et à raccorder au circuit hybride (G2), ces commutateurs permettant d'ajuster manuellement la combinaison déterminée des résistances et des condensateurs.

4. Dispositif selon la revendication 1 ou 2, caractérisé en ce que la partie enfichable (RC) comporte en outre les éléments de commutation pouvant être commandés (SR1 à SR4) et que des commutateurs (S1', S2') sont montés dans le réseau de reconstitution (NB2) correspondant et à raccorder au circuit hybride (G2), ces commutateurs pouvant être connectés manuellement à une source de tension (U) par les entrées de commande prédéterminées des éléments de commutation pouvant être commandés (SR1, etc.).

5. Dispositif selon la revendication 1 ou 2, caractérisé en ce que la partie enfichable (RC) contient en outre les éléments de commutation pouvant être commandés (SR1', etc.) qui sont constitués par des éléments de commutation pouvant être réglés électroniquement à leur position d'enclenchement.

# FIG. 1a

# FIG. 1b

# FIG.1c

FIG. 2a

FIG. 2b

FIG. 2c

0 181 469

FIG. 2d